# EUROPÄISCHE PATENTSCHRIFT

(11) **EP 1 610 982 B1**
(45) Veröffentlichungstag und Bekanntmachung des Hinweises auf die Patenterteilung: **18.04.2007**
(21) Anmeldenummer: 03815026.4
(22) Anmeldetag: 18.10.2003
(51) Int. Cl.: B60R 21/01, G01L 19/00

(54) **DRUCKSENSORANORDNUNG ZUR AUFPRALLDETEKTION**
COLLISION DETECTION PRESSURE SENSOR ASSEMBLY
ENSEMBLE DE DETECTION DE PRESSION SERVANT A DETECTER UNE COLLISION

(30) Priorität: 06.03.2003 DE 10309713
(43) Veröffentlichungstag der Anmeldung: 04.01.2006
(60) Teilanmeldung: 06116909.0
(73) Patentinhaber: ROBERT BOSCH GMBH, 70442 Stuttgart (DE)
(72) Erfinder: RECKNAGEL, Rolf-Juergen, 07747 Jena (DE); BUNSE, Michael, 76530 Baden-Baden (DE); WELLHOEFER, Matthias, 71701 Schwieberdingen (DE)
(86) Internationale Anmeldenummer: PCT/DE2003/003496
(87) Internationale Veröffentlichungsnummer: WO 2004/078530

(56) Entgegenhaltungen:
- EP-A- 0 978 425
- DE-A1- 10 114 465
- US-A- 5 419 407
- LORENZ PFAU ET AL: "Sensorsystem zur Seitenaufprallerkennung bei einem Kraftfahrzeug" SIEMENS TECHNIK REPORT, Bd. 2, Nr. 3, April 1999 (1999-04), Seite 44, XP007001798

## Beschreibung

### Stand der Technik

Die Erfindung geht aus von einer Drucksensoranordnung zur Aufpralldetektion nach der Gattung der unabhängigen Patentansprüche.

Aus DE 100 57 258 C1 ist es bekannt, dass Druck- oder Temperatursensoren zur Seitenaufpralldetektion verwendet werden können. Dafür werden Membransensoren verwendet, die aufgrund ihrer Membranstruktur auch für Beschleunigungen empfindlich sind.

Nachteilig daran ist, dass das Drucksignal durch die Beschleunigung verfälscht wird. Insbesondere an der Grenze zwischen Auslöse- und Nichtauslöse-Crashes kann es dadurch unter Umständen zu einer falschen Auslöseentscheidung kommen.

Aus FR 2641612 A1 ist ein Sensor bekannt, der sowohl einen Druck als auch eine Beschleunigung aufnimmt. Dazu ist eine bestimmte Anordnung von piezoelektrischen Elementen vorgesehen. Aus US 3,304,534 sind piezoelektrische Elemente bekannt, die zur Erfassung des Drucks und der Beschleunigung geeignet sind.

### Vorteile der Erfindung

Die erfindungsgemäße Drucksensoranordnung zur Aufpralldetektion mit den Merkmalen des unabhängigen Patentanspruchs hat demgegenüber den Vorteil, dass durch die Anordnung von Drucksensorelementen eine Trennung zwischen dem Drucksignal und dem Beschleunigungssignal, die durch die Drucksensorelemente gewonnen werden, ermöglicht wird. Dies verbessert die Auslöseempfindlichkeit eines Rückhaltesystems und verringert so Fehlentscheidungen. Insbesondere kann das so gewonnene Beschleunigungssignal auch zur Aufpralldetektion bzw. zur Aufprallplausibilisierung des

Drucksensorsignals verwendet werden. Dies erhöht die Zuverlässigkeit eines solchen Aufprallerkennungssystems.

Besonders vorteilhaft ist, dass wenigstens ein erstes und ein zweites Drucksensorelement auf gegenüberliegenden Seiten eines Druckeinlasskanals in einem Gehäuse der Drucksensoranordnung angeordnet sind.

Die Auswertung des Signals von den beiden Drucksensorelementen kann durch eine Addition und Subtraktion erfolgen, um so, wie oben dargelegt, das Drucksignal vom Beschleunigungssignal zu trennen und eine getrennte Verarbeitung zu erreichen. Dazu ist die Drucksensoranordnung mit einem Prozessor koppelbar, der entweder bei der Drucksensoranordnung direkt angeordnet ist oder beispielsweise über eine Leitung in einem Steuergerät eingebaut ist. Der Prozessor verwendet dann auch das Beschleunigungssignal zur Aufprallerkennung.

Durch die in den abhängigen Ansprüchen aufgeführten Maßnahmen und Weiterbildungen sind vorteilhafte Verbesserungen der im unabhängigen Patentanspruch angegebenen Drucksensoranordnung möglich.

Werden als Drucksensorelemente Membranen verwendet, führt eine Druckerhöhung zu einem in Bezug auf das Vorzeichen und den Betrag gleichen abgegebenen Signal der Drucksensorelemente, während die Beschleunigung zu einem Signal führt, das bei beiden Drucksensorelementen ein unterschiedliches Vorzeichen aufweist. Wird dies bei der Auswertung berücksichtigt, so kann in einfacher Weise das Drucksensorsignal vom Beschleunigungssensorsignal getrennt werden und getrennt ausgewertet werden. Anstatt einem Paar von Drucksensorelementen können auch mehrere Paare von Drucksensorelementen verwendet werden, die entweder parallel zueinander oder auch in einem Winkel von 90° zueinander angeordnet sind und beispielsweise am gleichen Druckeingangskanal partizipieren. Vorteilhafterweise kann solch ein Drucksensorelement mehr als eine Membran aufweisen. Üblicherweise wird jedoch nur eine Membran verwendet.

Vorteilhafterweise kann für die Drucksensoranordnung, insbesondere für die Membran, eine Vergelung zum Schutz gegen äußere Einflüsse vorgesehen sein. Auch eine Beschichtung, beispielsweise mit einer Passivierung, kann gegen solche äußeren Einflüsse hilfreich sein.

Zur Ausnutzung des Beschleunigungssignals, das auch aufgenommen wird, wenn beispielsweise kein Drucksensorsignal erfassbar ist, weil beispielsweise ein Aufprall nicht die Tür betrifft, in die der erfindungsgemäße Drucksensor eingebaut ist, sondern die B-Säule, wird der Drucksensor derart eingebaut, dass die Membranen maximal empfindlich für die zu erwartende Beschleunigung sind. Bei einem Seitenaufprall wird daher die Membran ungefähr parallel zur Außenhaut sein, um die Beschleunigung, die bei einem Seitenaufprall auftritt, optimal detektieren zu können.

### Zeichnungen

Ausführungsbeispiele der Erfindung sind in der Zeichnung dargestellt und werden in der nachfolgenden Beschreibung näher erläutert.

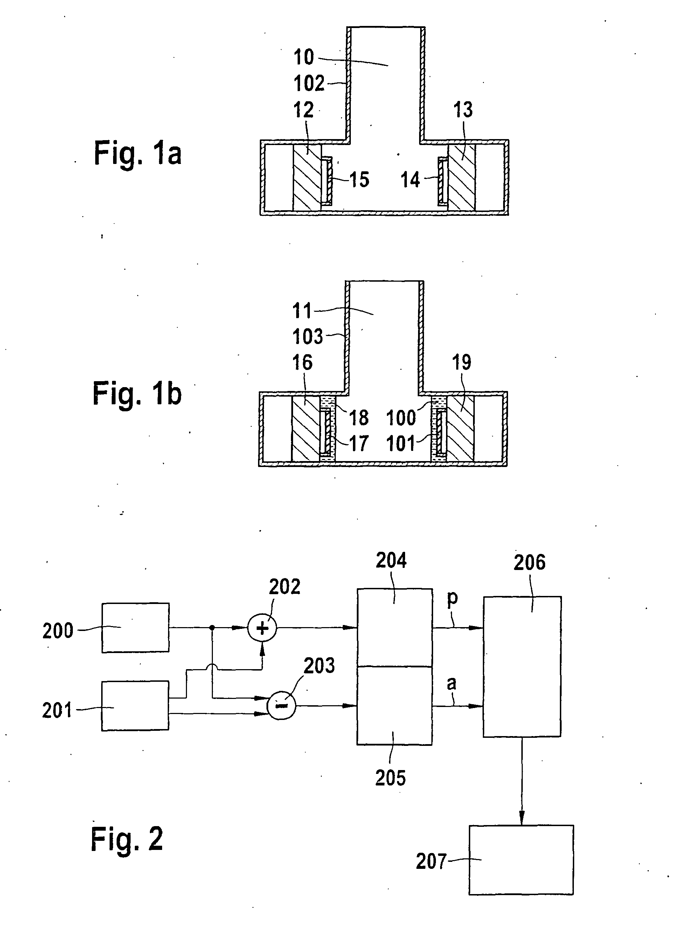

Es zeigen Figur 1a und b zwei Querschnitte durch die erfindungsgemäße Drucksensoranordnung, Figur 2 ein Blockschaltbild mit der erfindungsgemäßen Drucksensoranordnung.

### Beschreibung

Drucksensoren zur Erkennung eines Seitenaufpralls werden bereits seit einigen Jahren eingesetzt. Die Drucksensorelemente stellen dabei meist eine Membran da, mit der kapazitiv, induktiv oder piezo-resistiv der Druck in einem Volumen gemessen wird. Zum Schutz gegen Korrosion, Verschmutzung und Eindringen von Wasser oder ähnlichem wird diese Membran selbst oftmals geschützt, beispielsweise durch eine spezielle Schutzschicht oder eine Vollvergelung. Die Drucksensoren werden in einem Hohlraum, beispielsweise einem Seitenteil eines Fahrzeugs eingebaut, wobei der Hohlraum weitgehend geschlossen ist, so dass sich bei einer plötzlichen Volumenänderung infolge eines Aufpralls eine adiabatische Druckerhöhung ergibt.

Da die Sensormembran eine Masse besitzt, reagiert diese selbst schon auf Beschleunigungen. Je größer diese Masse ist, umso empfindlicher ist der Drucksensor.

Eine eventuell vorhandene Schutzschicht oder Vergelung hat zur Folge, dass der Drucksensor noch sensibler auf Beschleunigungssignale reagiert. Dadurch werden bei einem Crash- oder einem Missuse-Fall die Drucksignale je nach Masse durch die Beschleunigung verfälscht. An der Grenze zwischen Auslöse- und Nichtauslöse-Crash kann es dadurch unter Umständen zu einer falschen Auslöseentscheidung kommen.

Wird eine Tür durch einen Crash eingedrückt, kommt es, sofern die Tür weitgehend geschlossen ist, zu einer adiabatischen Zustandsänderung der Luft, die mit dem Drucksensor erkannt wird und eine besonders schnelle Methode der Seitenaufprallerkennung darstellt. Das bedeutet, dass ein eindeutiger Zusammenhang zwischen gemessener Druckänderung und Volumenänderung besteht. Die Selektion dieser Druckänderung erfolgt, wie gesagt, sehr schnell, innerhalb weniger Millisekunden in der Regel.

Die neuartige Drucksensoranordnung besitzt wenigstens zwei Sensormembranen, die die Druckänderung im Innenraum einer Tür detektieren. Dabei befinden sich vorzugsweise beide Sensorelemente in einem Gehäuse mit einem gemeinsamen Druckeinlasskanal. Das gemeinsame Gehäuse ist derart auszulegen, dass beide Drucksensorelemente einen ausreichenden Abstand zueinander haben. Beide Drucksensorelemente sind auf verschiedenen Seiten, bezogen auf den Druckeinlasskanal, anzubringen, der eine spezielle Form besitzt, um Verschmutzungen bzw. Eindringen von Wasser zu vermeiden. Die Sensorelemente können gegen äußere Einflüsse, beispielsweise durch eine Vergelung oder eine spezielle Beschichtung, geschützt sein. Dadurch erhöht sich die beschleunigungsempfindliche Masse. Durch diese beschriebene Drucksensoranordnung kann man den ursprünglichen Nachteil einer Beschleunigungsempfindlichkeit der Druckmessung zu einem Vorteil ausnutzen: Bei einer Beschleunigung, die senkrecht zu den Membranflächen wirkt, erfolgt bei beiden Sensorelementen eine Auslenkung in die gleiche Richtung. Durch die speziell gewählte Anordnung der Membranen - die Sensorelemente sind gegenläufig eingebaut - entstehen im Falle einer Druckänderung bei beiden Sensorelementen Signale mit gleichen Vorzeichen, während eine Beschleunigung Signale verschiedener Vorzeichen hervorruft. Daher lässt sich das Beschleunigungssignal vom Drucksignal eindeutig von der nachfolgenden Elektronik trennen. Die Summe der beiden Membransignale liefert das doppelte Drucksignal, während die Differenz das doppelte Beschleunigungssignal ergibt. Das gewonnene Beschleunigungssignal liegt zunächst als ein Drucksignal vor, kann aber direkt und eindeutig in eine echte Beschleunigung umgerechnet werden. Dies kann dadurch vorgenommen werden, dass eine Differenz gebildet wird, durch zwei dividiert wird und entsprechend skaliert wird, beispielsweise nach einem Kalibriervorgang.

Das so gewonnene Beschleunigungssignal kann beispielsweise als zweites und druckunabhängiges Sensorsignal interpretiert werden. Damit kann ein solcher Drucksensor auch die Crash-Diskriminierung aufgrund der Beschleunigungsinformation durchführen, also auch bei einem Crash, wenn die Autotür, in die der Sensor montiert ist, nicht getroffen wird. Das Beschleunigungssignal kann jedenfalls auch dazu verwendet werden, die Plausibilität für das Drucksignal zu liefern.

Um die Beschleunigungsempfndlichkeit optimal auszunutzen, sollte der Sensor derart montiert werden, dass die Membranfläche senkrecht auf der wirkenden Beschleunigung steht. Bei einem Schutz, beispielsweise durch Vollvergelung, ist darauf zu achten, dass die Gelmenge so optimiert wird, dass das System nicht zu träge wird, also noch eine schnelle Sensorreaktion möglich ist, wobei die Gelmenge nicht beliebig verringert werden sollte, um noch ausreichend Schutz zu bieten. Folglich kann der Vorteil des Schutzes einer Vollvergelung ausgeschöpft werden und gleichzeitig die Beschleunigungsempfindlichkeit von der Druckempfindlichkeit in zwei separate Signale getrennt werden.

Figur 1a und b zeigen zwei Beispiele der erfindungsgemäßen Sensoranordnung im Querschnitt. In Figur 1a ist ein Gehäuse 102 einer Drucksensoranordnung zu sehen. Das Gehäuse 102 weist einen Druckeinlasskanal 10 auf, an dessen Ende gegenüberliegend zwei Drucksensorelemente 12 und 13 angeordnet sind. Die Drucksensorelemente 12 und 13 weisen jeweils eine Membran 15 bzw. 14 auf. Figur 1b zeigt im Vergleich zu Figur 1a eine Version, bei der die Membran vergelt ist. Ein Gehäuse 103 weist wiederum einen Druckeinlasskanal 11 auf, an dessen Ende gegenüberliegend wiederum zwei Drucksensorelemente 16 und 19 angeordnet sind. Die Drucksensorelemente 16 und 19 weisen jeweils eine Membran 17 bzw. 101 auf, die jeweils vergelt sind und zwar durch die Vergelung 18 bzw. 100.

Es kommt über den Druckeinlasskanal 10 bzw. 11 ein erhöhter Druck auf die Membranen 15, 14 bzw. 17 und 101. Da die Membranen 15 und 14 und 17 und 101 jeweils gegenüberliegend sind, werden sie in der gleichen Weise durch einen erhöhten Druck voneinander bewegt. Kommt es zu einem niedrigeren Druck, werden sie zueinander bewegt. Folglich werden die Drucksensorelemente 12, 13 und 16 bzw. 19 das gleiche Drucksignal liefern. Die Membranen 14, 15, 17 und 101 sind für Beschleunigungen empfindlich in einer Richtung senkrecht zu ihrer Fläche. Das ist hier dann in einem Winkel von 90° zu den Druckeinlasskanälen 10 und 11. Da jedoch bei einer solchen Beschleunigung beispielsweise die Membran 14 und die Membran 15 sich jeweils nach links bewegen, wird die Membran 14 zu einem positiven Signal führen und die Membran 15 zu einem negativen Signal. Folglich können die Druck- und Beschleunigungssignale durch Addition und Subtraktion der Signale der Drucksensorelemente voneinander getrennt werden.

Dies ist in Figur 2 dargestellt. Zwei Drucksensorelemente 200 und 201 sind jeweils über einen Datenausgang mit einem Addierer 202 und einem Subtrahierer 203 verbunden. Der Addierer ist dann an eine Auswertung 204 angeschlossen und der Subtrahierer an eine Auswertung 205. Die resultierenden Signale werden dann einem Prozessor 206 zugeführt. Der Prozessor 206 ist über einen Datenausgang mit einem Rückhaltesystem 207 verbunden. Wie oben dargestellt, wird aus der Addition der Signale durch den Auswertebaustein 204 ein Drucksignal erzeugt und zwar das doppelte Drucksignal. Der Auswertebaustein 204 kann diese Verdopplung beispielsweise wiederum durch eine Halbierung berücksichtigen. Der Auswertebaustein 204 führt daher ein Drucksignal p dem Prozessor 206 zu. Der Auswertebaustein 205 dagegen erhält das Ergebnis der Subtraktion vom Subtrahierer 203. Wie oben dargestellt, ergibt sich daraus das Beschleunigungssignal, das der Auslösebaustein 205 aus diesem Differenzsignal ermittelt. Das Beschleunigungssignal a wird dem Prozessor 206 zugeführt, der mit dem Druck- und Beschleunigungssignal seinen Auslösealgorithmus für das Rückhaltesystem 207 berechnet und gegebenenfalls in Abhängigkeit von diesen Signalen das Rückhaltesystem 207 - Airbags, Gurtstraffer oder Überrollbügel - auslöst.

Ist die erfindungsgemäße Drucksensoranordnung in einem Seitenteil eines Fahrzeugs angeordnet, dann können die Auswertebausteine 204 und 205 dort angeordnet sein, wie auch der Prozessor 206, wobei dann über eine Leitung das Rückhaltesystem 207 mit dem Prozessor 206 verbunden ist. Es ist jedoch möglich, dass Teile der Auswertung, wie beispielsweise der Prozessor 206, in einem zentralen Steuergerät angeordnet sind, sodass lediglich die Sensorsignale zu diesem Steuergerät übertragen werden, das dann zentral die Auswertung übernimmt.

Für solche Drucksensoren werden üblicherweise Beschleunigungssensoren als Plausibilitätssensoren verwendet. Diese ziehen jedoch die Performance der Drucksensoren nach unten. Daher wird vorgeschlagen, mehr als einen Drucksensor in einem Hohlraum des Fahrzeugs zu verbauen, um den zweiten Drucksensor selbst als Plausibilitätssensor zu verwenden. Dafür weist jeder Drucksensor einen eigenen Druckeinlasskanal auf. Vorzugsweise werden die beiden Drucksensoren in einem gemeinsamen Gehäuse eingebaut. Die Drucksensoren können die oben dargestellten Drucksensorelemente aufweisen, um auch Beschleunigungen effektiv auszuwerten. Auch bezüglich der Anordnung der Auswertebausteine gilt hier das gleich wie bereits oben gesagt.

## Patentansprüche

1. Drucksensoranordnung zur Aufpralldetektion, wobei die Drucksensoranordnung sowohl empfindlich auf Druckänderungen als auch auf Beschleunigungen ist, wobei die Drucksensoranordnung derart konfiguriert ist, dass die Drucksensoranordnung durch eine Anordnung von Drucksensorelementen (12, 13, 16, 19,200,201) eine Trennung zwischen einem Drucksignal und einem Beschleunigungssignal von den Drucksensorelementen (12, 13, 16, 19, 200, 201) ermöglicht, **dadurch gekennzeichnet, dass** wenigstens ein erstes und ein zweites Drucksensorelement (12, 13, 16, 19, 200, 201) auf gegenüberliegenden Seiten eines Druckeinlasskanals (10, 11) in einem Gehäuse (102, 103) angeordnet sind, und dass ein erstes Signal von einem ersten Drucksensorelement (200) zu einem zweiten Signal von einem zweiten Drucksensorelement (201) addiert und subtrahiert wird, wobei die Summe das Drucksignal und die Differenz das Beschleunigungssignal ist.

2. Drucksensoranordnung nach Anspruch 1, **dadurch gekennzeichnet, dass** das erste und zweite Drucksensorelement jeweils wenigstens eine Membran (14, 15, 17, 101) aufweist.

3. Drucksensoranordnung nach Anspruch 1, **dadurch gekennzeichnet, dass** die Drucksensoranordnung derart mit einem Prozessor (206) koppelbar ist, dass das Beschleunigungssignal zur Aufprallerkennung verwendbar ist.

4. Drucksensoranordnung nach einem der vorhergehenden Ansprüche, **dadurch gekennzeichnet, dass** die Drucksensoranordnung eine Vergelung (18, 100) zum Schutz gegen äußere Einflüsse aufweist.

5. Drucksensoranordnung nach einem der vorhergehenden Ansprüche, **dadurch gekennzeichnet, dass** die Drucksensoranordnung eine Beschichtung zum Schutz gegen äußere Einflüsse aufweist.

6. Drucksensoranordnung nach einem der Ansprüche 2 bis 5, **dadurch gekennzeichnet, dass** die Drucksensoranordnung derart im Fahrzeug eingebaut ist, dass die wenigstens eine Membran (14, 15, 17, 101) senkrecht zur zu detektierenden Beschleunigung ist.

## Claims

1. Pressure sensor arrangement for detecting impacts, the pressure sensor arrangement being sensitive both to changes in pressure and to accelerations, the pressure sensor arrangement being configured in such a way that by means of an arrangement of pressure sensor elements (12, 13, 16, 19, 200, 201) the pressure sensor arrangement permits separation between a pressure signal and an acceleration signal from the pressure sensor elements (12, 13, 16, 19, 200, 201), **characterized in that** at least a first and a second pressure sensor element (12, 13, 16, 19, 200, 201) are arranged on opposite sides of a pressure inlet duct (10, 11) in a housing (102, 103), and **in that** a first signal from a first pressure sensor element (200) is added to and subtracted from a second signal from a second pressure sensor element (201), the sum being the pressure signal and the difference being the acceleration signal.

2. Pressure sensor arrangement according to Claim 1, **characterized in that** the first and second pressure sensor elements each have at least one diaphragm (14, 15, 17, 101).

3. Pressure sensor arrangement according to Claim 1, **characterized in that** the pressure sensor arrangement can be coupled to a processor (206) in such a way that the acceleration signal can be used for detecting impacts.

4. Pressure sensor arrangement according to one of the preceding claims, **characterized in that** the pressure sensor arrangement has gelling (18, 100) in order to protect against external influences.

5. Pressure sensor arrangement according to one of the preceding claims, **characterized in that** the pressure sensor arrangement has a coating for protecting against external influences.

6. Pressure sensor arrangement according to one of Claims 2 to 5, **characterized in that** the pressure sensor arrangement is installed in the vehicle in such a way that the at least one diaphragm (14, 15, 17, 101) is perpendicular to the acceleration to be detected.

## Revendications

1. Dispositif de détection de pression pour la détection d'une collision, le dispositif de détection de pression étant sensible aussi bien à des modifications de pression qu'à des accélérations, le dispositif de détection de pression étant configuré avec un ensemble d'éléments de détection de pression (12, 13, 16, 19, 200, 201), permettant une distinction entre un signal de pression et un signal d'accélération par les éléments de détection de pression (12, 13, 16, 19, 200, 201),
**caractérisé en ce qu'**
au moins un premier et un deuxième élément de détection de pression (12, 13, 16, 19, 200, 201) sont disposés sur des côtés opposés d'un canal d'admission de pression (10, 11) dans un boîtier (102, 103), et
un premier signal provenant d'un premier élément de détection de pression (200) est ajouté et soustrait à un deuxième signal provenant d'un deuxième élément de détection de pression (201), la somme correspondant au signal de pression et la différence à l'accélération.

2. Dispositif de détection de pression selon la revendication 1,
**caractérisé en ce que**
le premier et le deuxième élément de détection de pression présentent respectivement au moins une membrane (14, 15, 17, 101).

3. Dispositif de détection de pression selon la revendication 1,
**caractérisé en ce que**
le dispositif de détection de pression peut être couplé à un processeur (206) de telle sorte que le signal d'accélération est utilisable pour la détection d'une collision.

4. Dispositif de détection de pression selon l'une des revendications précédentes,
**caractérisé en ce que**
le dispositif de détection de pression présente une gélification (18, 100) faisant office de protection contre des influences extérieures.

5. Dispositif de détection de pression selon l'une des revendications précédentes,
**caractérisé en ce que**
le dispositif de détection de pression présente un revêtement faisant office de protection contre des influences extérieures.

6. Dispositif de détection de pression selon l'une des revendications 2 à 5,
**caractérisé en ce que**
le dispositif de détection de pression est intégré dans le véhicule de sorte qu'au moins une membrane (14, 15, 17, 101) est perpendiculaire à l'accélération à détecter.
